(19) Europäisches Patentamt

European Patent Office

Office européen des brevets

(11) Numéro de publication: **0 273 804 B1**

(12) **FASCICULE DE BREVET EUROPEEN**

(45) Date de publication du fascicule du brevet:
26.09.90

(21) Numéro de dépôt: **87402713.9**

(22) Date de dépôt: **01.12.87**

(51) Int. Cl.⁵: **B60Q 1/26, B60Q 1/42**

(54) **Commutateur électrique, en particulier pour véhicules automobiles, comportant des moyens d'indexation perfectionnés.**

(30) Priorité: **03.12.86 FR 8616931**

(43) Date de publication de la demande:
**06.07.88 Bulletin 88/27**

(45) Mention de la délivrance du brevet:
**26.09.90 Bulletin 90/39**

(84) Etats contractants désignés:
**DE ES GB IT SE**

(56) Documents cités:
**FR-A- 2 232 064**
**FR-A- 2 350 980**

(73) Titulaire: **JAEGER, 2, rue Baudin,**
**F-92303 Levallois-Perret(FR)**

(72) Inventeur: **Chrétien, Louis Jacques, 65 rue du Grillon,**
**F-95610 Eragny S/Oise(FR)**

(74) Mandataire: **Martin, Jean-Jacques et ai, Cabinet**
**REGIMBEAU 26, Avenue Kléber, F-75116 Paris(FR)**

### Description

La présente invention concerne le domaine des commutateurs électriques, en particulier pour véhicules automobiles.

La présente invention concerne plus précisément les commutateurs électriques du type comportant un boîtier qui loge des contacts électriques et un équipage mobile entraîné en déplacement par un levier de commande pour agir sur les contacts électriques en vue d'assurer au moins une fonction prédéterminée.

La présente invention a pour but de proposer des moyens d'indexation perfectionnés contrôlant le déplacement de l'équipage mobile.

Selon un premier aspect, la présente invention concerne un commutateur électrique du type connu en soi comportant un boîtier qui loge des contacts électriques et un équipage mobile entraîné en déplacement par un levier de commande pour agir sur les contacts en vue d'assurer au moins une fonction prédéterminée, des moyens d'indexation étant prévus pour contrôler le déplacement de l'équipage caractérisé par le fait qu'il comprend de plus des moyens élastiques exerçant sur l'équipage mobile un effort résistant sensiblement constant à l'encontre de son déplacement.

La demanderesse a constaté que cette disposition permet de limiter très notablement le bruit de fonctionnement du commutateur électrique conforme à la présente invention.

Selon un second aspect, la présente invention propose un commutateur électrique du type connu en soi comportant un boîtier qui loge des contacts électriques et un équipage mobile à pivotement entre une position de repos et au moins une position de travail, entraîné à déplacement par un levier de commande pour agir sur les contacts électriques en vue d'assurer au moins une fonction prédéterminée, caractérisé par le fait que l'équipage mobile possède une surface latérale qui diverge par rapport à une face latérale d'appui du boîtier, en éloignement de l'axe de pivotement, selon un angle légèrement supérieur à l'amplitude de pivotement de l'équipage mobile entre la position de repos et la position de travail.

Grâce à cette disposition on obtient que lorsque l'équipage mobile est déplacé vers la face latérale d'appui du boîtier il entre en contact avec celle-ci au niveau d'une zone de sa surface latérale, limitée et proche de l'axe de pivotement. De plus, l'équipage mobile entre en contact avec la face latérale d'appui du boîtier selon une incidence différente de la normale. Toutes ces dispositions coopèrent pour limiter également le bruit de fonctionnement du commutateur conforme à la présente invention.

Selon un troisième aspect, la présente invention propose un commutateur électrique du type connu en soi comportant un boîtier qui loge des contacts électriques et un équipage mobile entre une position de repos et au moins une position de travail, l'équipage mobile étant entraîné en déplacement par un levier de commande pour agir sur les contacts électriques en vue d'assurer une fonction prédéterminée, caractérisé par le fait qu'il comprend deux poussoirs d'indexation de l'équipage mobile sollicités contre des cames respectives.

De façon avantageuse l'équipage mobile est déplacé à pivotement entre une position de repos et deux positions de travail situées respectivement de part et d'autre de la position de repos, tandis que les cames sont symétriques.

Plus précisément encore, selon une caractéristique avantageuse de la présente invention, chaque came possède deux surfaces actives, l'une formée d'une rampe continue définissant une position instable de l'équipage lorsque le poussoir d'indexation se déplace sur cette rampe, et l'autre formée d'une rampe comportant une denture convexe qui détermine deux positions stables de l'équipage selon que le poussoir d'indexation associé est placé d'un côté ou de l'autre de la denture.

D'autres caractéristiques, buts et avantages de la présente invention apparaîtront à la lecture de la description détaillée qui va suivre et en regard des dessins annexés donnés à titre d'exemple non limitatif sur lesquels :

- la figure 1 représente une vue schématique en coupe longitudinale d'un commutateur conforme à la présente invention selon un plan de coupe illustré schématiquement sous la référence I-I sur la figure 2,

- la figure 2 représente une vue de dessous des éléments essentiels du commutateur conforme à la présente invention selon des plans de coupe non coplanaires illustrés sous la référence II-II sur la figure 1,

- la figure 3 représente une vue en coupe transversale du commutateur conforme à la présente invention selon un plan de coupe référencé III-III sur la figure 1 qui est orthogonal au plan de coupe longitudinal I-I de la figure 1,

- la figure 4 représente une vue de dessous de la rotule d'un commutateur électrique conforme à la présente invention selon une vue similaire à la figure 2,

- la figure 5 représente une vue latérale, partiellement en coupe, de la même rotule, selon une vue similaire au plan de coupe de la figure 1,

- la figure 6 représente une vue de la chape d'un commutateur électrique conforme à la présente invention selon un plan de coupe similaire à celui de la figure 1, et

- la figure 7 représente la chape d'un commutateur électrique conforme à la présente invention ; plus précisément, la demi-vue supérieure de la figure 7 représente une vue de dessous de la chape, similaire à la figure 2 tandis que la demi-vue inférieure de la figure 7 représente la chape selon des plans de coupe non coplanaires illustrés sous la référence VII-VII sur la figure 1.

On aperçoit sur les figures annexées un commutateur électrique comprenant un boîtier 100 qui loge un équipage mobile 400.

L'équipage mobile 400 est porté à pivotement sur le boîtier 100 autour d'un axe référencé 220.

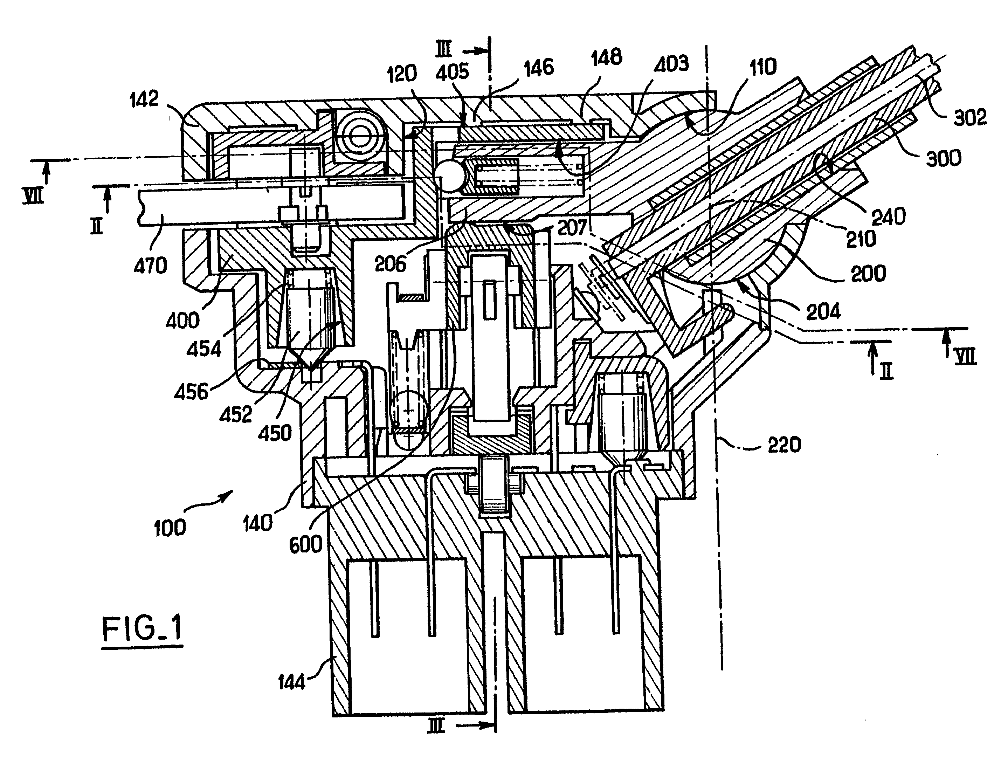

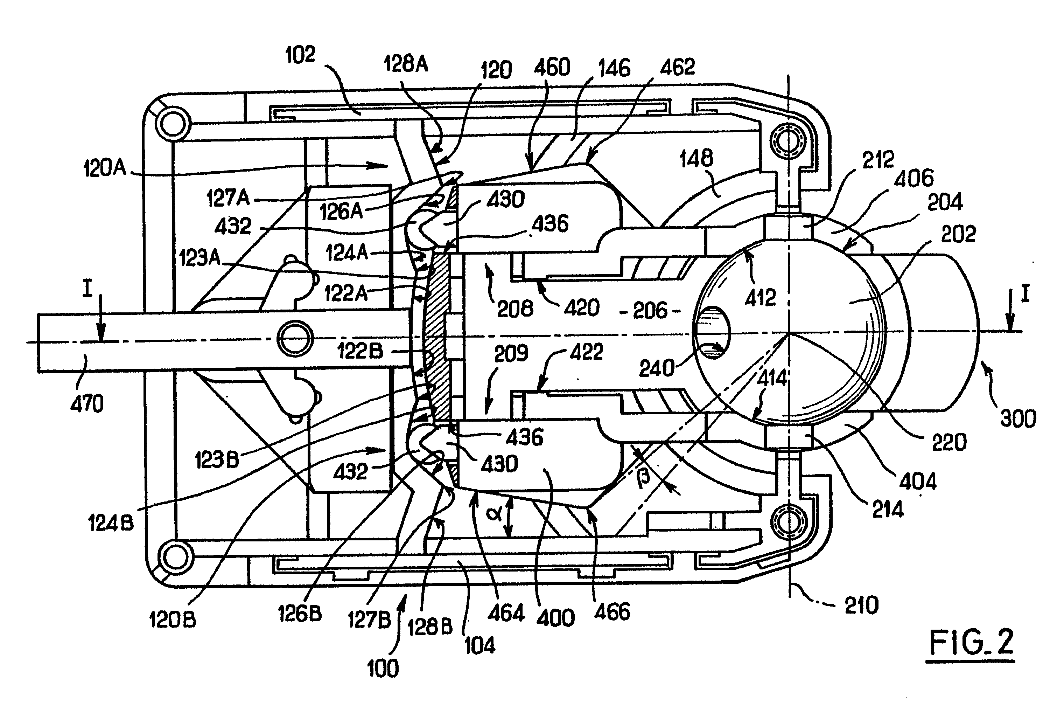

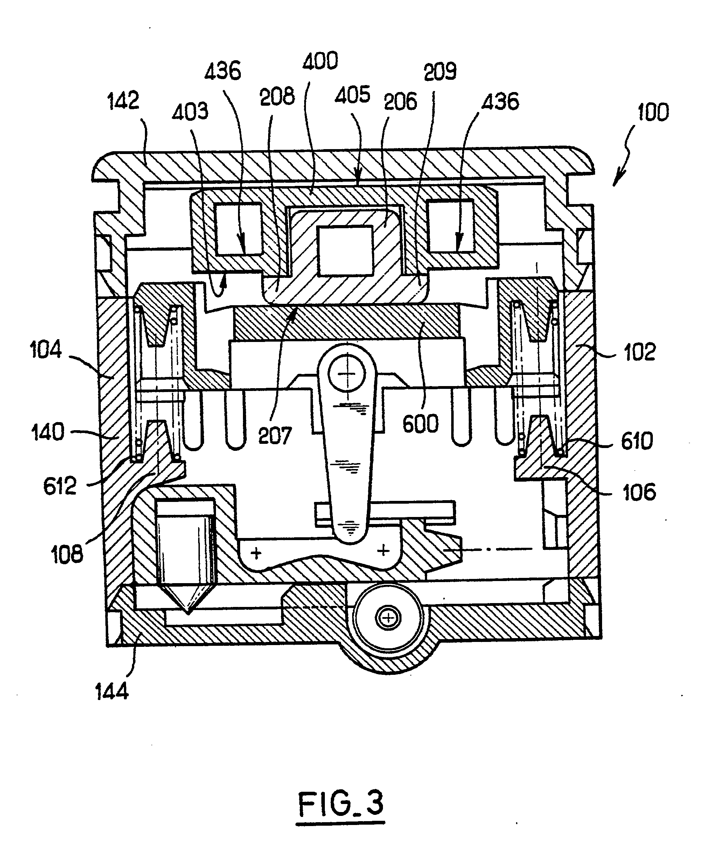

L'axe 220 est parallèle aux coupes des figures 1 et 3 et est perpendiculaire au plan de la figure 2.

L'équipage mobile 400 est commandé à pivotement autour de l'axe 220 par un levier 300.

Selon le mode de réalisation représenté sur les figures annexées, l'équipage mobile 400 est entraîné par le levier 300 par l'intermédiaire d'une rotule 200.

Néanmoins, dans le cadre de la présente invention, on peut envisager d'entraîner directement l'équipagemobile 400 à l'aide du levier 300, en rendant l'équipage mobile 400 solidaire du levier 300.

Pour cette raison on ne décrira pas dans le détail le mode d'entraînement de l'équipage mobile 400 à l'aide du levier 300.

Cependant, pour la bonne compréhension du commutateur illustré sur les figures annexées, on notera que la rotule 200 comprend un corps sphérique 202 guidé à pivotement dans un palier sphérique 110 du boîtier 100 autour de deux axes orthogonaux 210, 220, l'un des axes de pivotement de la rotule 200 correspondant à l'axe de pivotement 220 précité de l'équipage mobile 400.

Le second axe 210 de pivotement de la rotule 200 est perpendiculaire au plan de coupe de la figure 1 et parallèle au plan de coupe de la figure 3 et au plan de la figure 2.

La rotule 200 comporte un canal 240 généralement transversal aux axes de pivotement 210, 220. Le canal 240 reçoit le levier 300 libre de rotation autour de son axe longitudinal 302. Néanmoins, le levier 300 est lié à la rotule 200 lors de ses pivotements autour des axes 210 et 220 précités.

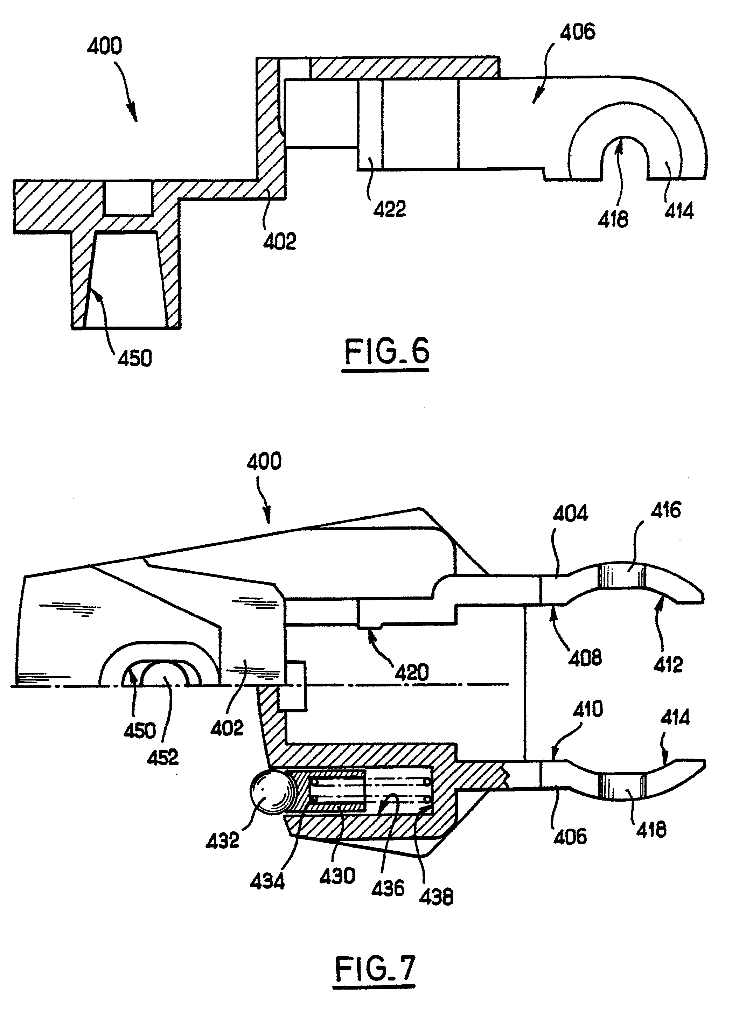

Par ailleurs, selon le mode de réalisation représenté sur les figures annexées, l'équipage mobile 400, comme illustré en particulier sur les figures 6 et 7, prend la forme d'une chape. Cette chape est formée pour l'essentiel d'une embase 402 et de deux ailes 404, 406.

Les ailes 404 et 406 sont généralement parallèles entre elles et parallèles au plan de coupe de la figure 1. Elles s'étendent d'un même côté de l'embase 402.

Les ailes 404, 406 sont munies au niveau de leur extrémité libre opposée à l'embase 402, sur leur surface interne en regard 408, 410, de premières portées d'appui 412, 414.

Les premières portées d'appui 412, 414 qui se font face sont définies par des surfaces sphériques concaves complémentaires de la surface extérieure 204 du corps central 202 de la rotule.

De plus, les ailes 404, 406 sont munies de secondes portées d'appui 416, 418. Les secondes portées d'appui 416, 418 débouchent sur une face latérale commune des ailettes 404, 406. Pour l'essentiel, les secondes portées d'appui 416, 418 sont définies par une calotte cylindrique concave complémentaire de l'enveloppe cylindrique de tourillons 212, 214 prévus sur le corps 202 de la rotule 200. Les tourillons 212, 214 sont diamètralement opposés, coaxiaux entre eux et coaxiaux à l'axe 210 de pivotement de la rotule.

Enfin, la chape 400 est munie de troisièmes portées d'appui 420, 422. Les troisièmes portées d'appui 420, 422 sont définies sur les surfaces internes en regard 408, 410 précitées des ailes 404, 406. Les troisièmes portées d'appui 420, 422 sont parallèles entre elles et parallèles au plan de coupe I-I illustré sur la figure 2.

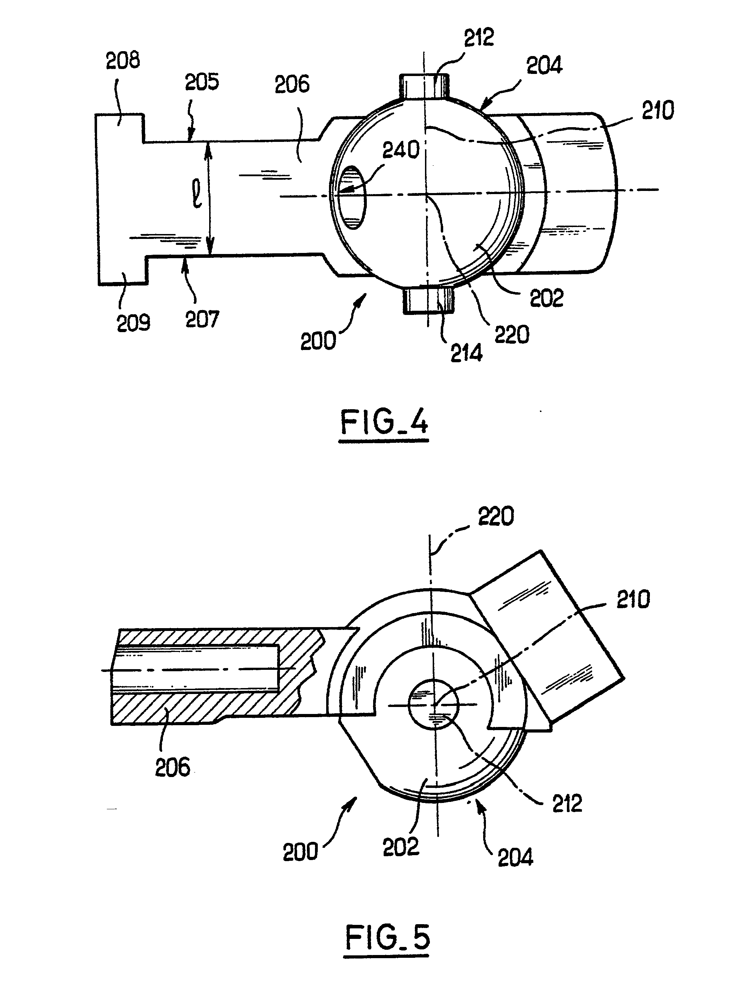

La distance séparant les troisièmes portées d'appui 420, 422 correspond à la largeur référencée 1 sur la figure 4, d'un doigt de commande 206 solidaire de la rotule 200. On notera de plus que les troisièmes portèes d'appui 420, 422 s'étendent perpendiculairement à l'axe principal 210.

Lorsque la chape 400 est engagée sur la rotule 200, les premières portées d'appui 412, 414 reposent contre la surface extérieure sphérique 204 de la rotule 200, les secondes portées d'appui 416, 418 reposent sur les tourillons 212, 214 de la rotule, et les troisièmes portées d'appui 420, 422 reposent contre les surfaces latérales 205, 207 du doigt de commande 206.

Ainsi, l'homme de l'art comprendra aisément que la chape 400 suit constamment la rotule 200 lors de son pivotement autour de l'axe 220, tout en autorisant un pivotement relatif de la rotule 200 par rapport à la chape 400 lorsque la rotule 200 est déplacée à pivotement autour de l'axe 210.

Pour résumer la liaison existant entre le levier de commande 300 et la chape 400, on notera que : la rotule 200 est portée à pivotement sur le boîtier 100 autour de deux axes transversaux 210, 220 ; la rotule 200 reçoit le levier 300 dans le canal traversant 240 ; enfin la chape 400 est portée par la rotule 200 ; le levier de commande 300 est libre de rotation autour de son axe longitudinal par rapport à la rotule 200 et donc par rapport à la chape 400 ; par contre, le levier de commande 300 est lié à la rotule 200 lors de ses pivotements autour des axes 210, 220 ; la chape 400 est liée à la rotule 200 et au levier 300 lors des pivotements autour de l'axe 220 ; enfin, la rotule 200 et le levier de commande 300 sont libres de rotation par rapport à la chape 400 autour de l'axe 210.

La chape 400 est munie de moyens servant d'indexation par rapport au boîtier 100 lors de pivotements autour de l'axe 220.

Ces moyens d'indexation comprennent pour l'essentiel des plots d'indexation 430, équipés le cas échéant d'un galet 432, sollicités élastiquement par un ressort 434 contre une surface d'indexation formant came référencée 120 sur la figure 2.

Selon une caractéristique préférentielle de l'invention, les moyens d'indexation de la chape 400 sont symétriques par rapport au plan de coupe longitudinal de la figure 1, référencée I-I sur la figure 2.

Selon le mode de réalisation illustré sur les figures annexées, la surface d'indexation 120 est solidaire du boîtier 100. De plus, il est prévu deux plots d'indexation 430 logés respectivement dans des alésages borgnes 436 ménagés dans l'embase 402 de la chape 400. Les ressorts de sollicitation 434 sont insérés entre le fond 438 des alésages borgnes 436 et les plots 430 associés.

La surface d'indexation 120 ménagée sur le boîtier 100 est dirigée vers le corps 202 de la rotule 200 et donc vers l'axe de pivotement 220. Par contre, les alésages 436 ménagés dans la chape 400 et logeant les ressorts de sollicitation 434 ainsi que les plots d'indexation 430, débouchent à l'opposé du corps 202 de la rotule 200.

Ainsi, l'homme de l'art comprendra aisément à l'examen des figures annexées que les ressorts d'indexation 434 poussent les plots d'indexation 430 et les galets 432 associés vers le fond de concavités, définies sur la surface d'indexation 120, dirigées vers l'axe de pivotement 220.

La coopération ainsi définie entre la surface d'indexation 120 et les moyens d'indexation comprenant des ressorts 434, les plots 430 et les galets 432 détermine des positions stables pour la chape 400 lorsque les galets reposent contre le fond de concavités de la surface d'indexation 120.

La géométrie de la surface d'indexation 120 est adaptée pour définir une position de repos et deux positions de travail pour la chape 400.

La position de repos de la chape correspond à la position illustrée sur la figure 2. En position de repos de la chape 400 les poussoirs d'indexation 430 et les galets 432 associés sont symétriques par rapport au plan de coupe I-I.

Les positions de travail de la chape 400 sont définies respectivement de part et d'autre de la position de repos illustrée sur la figure 2. Elles sont obtenues lors du pivotement du levier de commande 300 autour de l'axe 220, respectivement dans le sens des aiguilles d'une montre et dans le sens contraire des aiguilles d'une montre selon l'illustration de la figure 2.

Dans le cadre de ce mode de réalisation la chape 400 peut être utilisée pour commander de façon classique en soi les indicateurs de changement de direction d'un véhicule automobile.

Pour cela, la chape 400, comme illustré en particulier sur la figure 1, possède un alésage borgne 450 d'axe parallèle à l'axe de pivotement 220. L'alésage 450 loge un plot de contact 452 et un ressort de sollicitation 454. Le plot 452 qui émerge à l'extérieur de l'alésage 450 est sollicité contre un jeu de lamelles 456 par le ressort 454.

Selon que le levier de commande 300 et la chape 400 sont entraînés dans un sens ou dans l'autre autour de l'axe 220, le plot de contact 452 relie des paires de lamelles 456 différentes pour commander alternativement les uns ou les autres des indicateurs de changement de direction du véhicule.

La surface d'indexation 120 est formée de deux sous-ensembles coopérant respectivement avec l'un des galets d'indexation 432. Chacun de ces sous-ensembles est formé de plusieurs facettes d'indexation dont la géométrie sera décrite plus en détail par la suite. Les facettes des deux sous-ensembles d'indexation, symétriques par rapport au plan de coupe I-I, porteront des références numériques identiques mais assorties respectivement d'indices A et B à des fins de distinction.

Selon le mode de réalisation illustré sur les figures annexées, chacun des sous-ensembles d'indexation 120 A, 120 B, comprend successivement à partir du plan de symétrie I-I vers les parois latérales 102, 104 du boîtier, quatre facettes référencées respectivement 122, 124, 126 et 128.

Les premières facettes 122 A, 122B sont cylindriques de révolution autour de l'axe de rotation 220.

Les secondes facettes 124A, 124B divergent par rapport à l'axe de pivotement 220 en éloignement du plan de symétrie I-I.

Inversement, les troisièmes facettes 126A, 126B convergent par rapport à l'axe de pivotement 220 en éloignement du plan de symétrie I-I.

Enfin, les quatrièmes facettes 128A, 128B divergent par rapport à l'axe de rotation 220 en éloignement du plan de symétrie I-I.

Les deuxième et troisième facettes 124, 126 définissent en coopération une concavité dirigée vers l'axe de pivotement 220. La distance séparant le fond de ces concavités est telle que les galets d'indexation 432 puissent reposer simultanément contre le fond de celles-ci. Quand les galets d'indexation reposent contre le fond des concavités précitées définies entre les seconde et troisième facettes 124, 126, la chape 400 est placée en position de repos stable.

Lorsque le levier de commande 300 et la chape 400 sont entraînés autour de l'axe de pivotement 220 dans le sens des aiguilles d'une montre selon la représentation de la figure 2, l'un des galets d'indexation 432 roule contre la troisième facette 126A, tandis que le second galet d'indexation 432 roule sur la deuxième facette 124B. La circulation du second galet d'indexation 432 sur la seconde facette 124B n'induit pas d'action d'indexation significative dans la mesure où la seconde facette 124B diverge peu d'une surface cylindrique de révolution autour de l'axe de pivotement 220. Par contre, la circulation du premier galet d'indexation 432 sur la troisième facette 126A comprime le ressort d'indexation 434. De ce fait, si l'effort exercé sur le levier de commande 300 est relâché avant que le premier galet 432 franchisse le sommet 127A défini entre la troisième et la quatrième facettes 126A, 128A et que le second galet d'indexation 432 franchisse le sommet 123B défini entre la première et la seconde facettes 122B, 124B, le ressort de compression 434 associé au premier galet 432 ramène la chape 400 dans la position de repos précitée telle que les galets reposent contre le fond des concavités définies entre les seconde et troisième facettes 124, 126.

La circulation du premier galet 432 sur la troisième facette 126A correspond par conséquent à une position instable de la chape 400. Cette position instable correspond de préférence à une position instable de commande des indicateurs de changement de direction dénommé généralement position autoroute.

On notera que l'ouverture angulaire des seconde et troisième facettes 124, 126 par rapport à l'axe de rotation 220 est au moins sensiblement identique, de telle sorte que les galets d'indexation 432 franchissent simultanément les sommets 123 et 127 précités.

On notera à l'examen des figures annexées que les secondes facettes 124A, 124B sont constituées, à partir des faces latérales 102, 104 du boîtier vers le plan de symétrie I-I d'une première partie qui converge faiblement vers l'axe de pivotement 220 en rapprochement du plan de coupe I-I, suivi d'une seconde partie qui converge plus fortement en direction de l'axe de pivotement 220 en rapprochement du plan de coupe I-I. Cette partie de plus forte convergence en direction de l'axe de pivotement 220 définit une denture convexe au niveau du sommet 123 séparant les première et seconde facettes 122, 124.

Ainsi, lorsque l'un des galets d'indexation 432 après avoir circulé sur la première partie de la seconde facette 124, atteint la seconde partie de plus forte convergence, l'opérateur qui manipule le levier de commande 300 ressent une plus forte résistance qui lui signale la fin de la position instable dite d'autoroute précitée.

Enfin, lorsque les galets d'indexation 432 franchissent les sommets 123 , 127 séparant les paires de facettes précitées, l'un des galets d'indexation 432 circule sur la quatrième facette 128 tandis que l'autre galet d'indexation 432 circule sur la première facette 122. Le premier galet d'indexation 432 repose alors contre le fond de la concavité définie entre la quatrième facette 128 et la face latérale associée 102 ou 104 du boîtier.

La chape 400 est à nouveau placée dans une position stable. Cette position correspond à une position de travail dans laquelle l'un des indicateurs de changement de direction est mis sous tension par l'intermédiaire du plot 452 qui relie une paire de lamelles électriquement conductrices 456.

Pour sortir de cette position stable de travail, et revenir en position de repos telle qu'illustrée sur la figure 2, l'opérateur peut opérer un effort de sens inverse sur le levier de commande 300. La chape 400 peut également être ramenée en position de repos telle qu'illustrée sur la figure 2 grâce à une biellette 470 entraînée selon des modalités classiques en soi par la rotation du volant du véhicule automobile. La liaison définie entre la biellette 470 et la chape 400, bien connue de l'homme de l'art ne sera pas décrite plus en détail par la suite.

On notera que grâce à la disposition symétrique de la surface d'indexation 120, les deux sous-ensembles 120A, 120B de cette surface d'indexation remplissent des fonctions complémentaires lors du pivotement de la chape 400 autour de l'axe 220. Ainsi par exemple lorsque l'un des galets d'indexation 432 circule sur la troisième facette 126A pour contrôler la position instable de la chape 400, l'autre galet d'indexation 432 circule sur la seconde facette 124 possédant la denture convexe 123 précitée. On obtient ainsi une disposition compacte et un débattement relativement faible du galet d'indexation 432.

On notera de plus à l'examen des figures annexées que le doigt de commande 206 solidaire de la rotule 202 repose contre un coulisseau 600. Le coulisseau 600 est guidé à translation dans le boîtier 100 parallèlement à l'axe 220. Le coulisseau 600 est sollicité en appui contre le doigt de commande 206 par des ressorts référencés 610, 612 sur la figure 3. Les ressorts 610 et 612 sont intercalés entre des voiles 106, 108 solidaires du boîtier et le coulisseau 600.

Selon le mode de réalisation illustré sur les figures annexées, le boîtier 100 est composé d'un corps médian 140 et deux chapeaux 142, 144.

Pour simplifier la description les chapeaux 142 et 144 seront dénommés respectivement supérieur et inférieur. Les axes des ressorts 610 et 612 sont généralement parallèles à l'axe de pivotement 220. Les ressorts 610 et 612 poussent le coulisseau 600 contre la surface inférieure 207 du doigt de commande 206, le doigt de commande 206 contre la surface inférieure 403 de la chape, au niveau de décrochement référencé 208, 209 et la chape 400 contre le chapeau supérieur 142. Plus précisément, la chape 400 repose contre des nervures 146, 148 solidaires du chapeau supérieur 142.

Plus précisément encore, la surface supérieure 405 de la chape repose contre des surfaces inférieures des nervures 146, 148 qui sont planes et en forme de couronne centrée sur l'axe de pivotement 220.

Ainsi, les ressorts 610, 612 exercent sur la chape 400 un effort résistant constant à l'encontre de son déplacement à pivotement autour de l'axe 220. Cette disposition s'avère avantageuse dans la mesure où elle limite l'effet du couple moteur obtenu lorsque l'un des galets d'indexation 432 atteint les quatrième facettes 128 de la surface d'indexation 120. En effet, en l'absence de l'effort résistant exercé par les ressorts 610, 612, le couple moteur obtenu lorsque les galets d'indexation 432 atteignent les quatrième facettes 128 risqueraient d'entraîner violemment la chape 400 contre les parois latérales 102, 104 du boîtier avec génération inévitable d'un bruit néfaste.

Par contre, grâce à l'effort résistant exercé par les ressorts 610 et 612, l'effet du couple moteur précité est réduit et la vitesse de déplacement de la chape contre les faces latérales 102, 104 du boîtier est limitée.

Sur la figure 2 annexée, on a référencé β l'amplitude de pivotement de la chape 400 autour de l'axe 220, entre une position de repos et une position de travail. Comme indiqué précédemment la position de repos est obtenue lorsque les galets d'indexation 432 reposent contre le fond des concavités définies entre les seconde et troisième facettes 124, 126.

La position de travail est obtenue lorsque l'une des faces latérales 460, 464 de la chape 400 vient reposer contre une face latérale 102 ou 104 du boîtier.

Plus précisément encore, selon le mode de réalisation illustré sur les figures, les positions de travail sont obtenues lorsque l'une des zones référencées 462, 466 des faces latérales 460, 464 de la chape 400 vient reposer contre la face latérale associée 102 ou 104 du boîtier.

Par ailleurs, selon la présente invention, les faces latérales 460, 464 de la chape 400 divergent par rapport aux faces latérales 102, 104 du boîtier, en éloignement de l'axe de pivotement 220 selon un angle α légèrement supérieur à l'amplitude de pivotement β de la chape 400 entre la position de repos telle qu'illustré sur la figure 2 et l'une des position de travail précitée.

De préférence l'écart entre les angles α et β est de l'ordre de 1°. A titre d'exemple l'angle β peut être de l'ordre de 9° tandis que l'angle α est de l'ordre de 10°.

L'homme de l'art comprendra aisément à l'examen des figures annexées que grâce à cette caractéristique la zone de contact 462, 466 entre la chape 400 et les faces latérales 102, 104 du boîtier est rapprochée de l'axe de pivotement 220. De ce fait, les zones 462, 466 contactent les faces latérales 102, 104 du boîtier selon une incidence intermédiaire entre une incidence normale et une incidence rasante. D'autre part la zone contactant initialement les faces latérales 102, 104 du boîtier est limitée en surface. Toutes ces dispositions permettent également de limiter très largement le bruit de fonctionnement du commutateur lorsque la chape 400 atteint ses positions de travail et vient reposer contre les faces latérales 102, 104 du boîtier; la chape 400 et/ou le boîtier 100 étart réalisés en matière plastique relativement souple par exemple en polyamide ou polyacétal.

## Revendications

1. Commutateur électrique du type comportant un boîtier (100) qui loge des contacts électriques et un équipage mobile (400) entraîné en déplacement par un levier de commande (300) pour agir sur les contacts électriques en vue d'assurer au moins une fonction prédéterminée, des moyens d'indexation (120, 432, 434) étant prévus pour contrôler le déplacement de l'équipage (400), caractérisé par le fait qu'il comprend de plus des moyens élastiques (610, 612) exerçant sur l'équipage mobile un effort résistant sensiblement constant à l'encontre de son déplacement.

2. Commutateur électrique selon la revendication 1, caractérisé par le fait que l'équipage mobile est entraîné en pivotement (220) par rapport au boîtier (100).

3. Commutateur électrique selon la revendication 2, caractérisé par le fait que les moyens élastiques (610, 612) exercent sur l'équipage mobile (400) un effort résistant dont la résultante est parallèle à l'axe de pivotement (220).

4. Commutateur électrique selon l'une des revendications 1 à 3, caractérisé par le fait que les moyens élastiques (610, 612) poussent l'équipage mobile (400) contre des surfaces d'appui planes en forme de couronne (146, 148) centrées sur l'axe de pivotement (220).

5. Commutateur électrique selon la revendication 1 du type comportant un boîtier (100) qui loge des contacts électriques et un équipage (400) mobile à pivotement entre une position de repos et au moins une position de travail, entraîné en déplacement par un levier de commande (300) pour agir sur les contacts électriques en vue d'assurer au moins une fonction prédéterminée, caractérisé par le fait que l'équipage mobile (400) possède une surface latérale (460, 464) qui diverge par rapport à une face latérale d'appui (102, 104) du boîtier, en éloignement de l'axe de pivotement, selon un angle (α) légèrement supérieur à l'amplitude de pivotement (β) de l'équipage (400) entre la position de repos et la position de travail.

6. Commutateur électrique selon la revendication 5, caractérisé par le fait que l'équipage (400) est mobile entre une position de repos et deux positions de travail symétriques de la position de repos, et par le fait que l'équipage mobile (400) possède deux surfaces latérales opposées (460, 464) qui divergent par rapport à des faces latérales d'appui (102, 104) respectivement associées, prévues sur le boîtier, en éloignement de l'axe de pivotement (220), selon un angle (α) légèrement supérieur à l'amplitude de pivotement (β) de l'équipage (400) entre la position de repos et respectivement chacune des positions de travail.

7. Commutateur électrique selon l'une des revendications 5 ou 6, caractérisé par le fait que l'inclinaison au repos de chacune des faces latérales (460, 464) de l'équipage mobile (400) par rapport aux faces latérales (102, 104) du boîtier est supérieure de l'ordre de 1° à l'amplitude de pivotement de l'équipage mobile (400) entre sa position de repos et chaque position de travail.

8. Commutateur électrique selon l'une des revendications 1 à 7, du type comportant un boîtier qui loge des contacts électriques et un équipage (400) mobile entre une position de repos et au moins une position de travail, entraîné en déplacement par un levier de commande (300) pour agir sur des contacts électriques en vue d'assurer au moins une fonction prédéterminée, caractérisé par le fait qu'il comprend deux poussoirs (430, 432) d'indexation de l'équipage mobile (400), sollicités contre des surfaces d'indexation respectives (120A, 120B).

9. Commutateur électrique selon la revendication 8, caractérisé par le fait que l'équipage (400) est mobile entre une position de repos et deux positions de travail placées respectivement de part et d'autre de la position de repos et que les surfaces d'indexation (120A, 120B) coopérant respectivement avec les poussoirs d'indexation (430) sont symétriques.

10. Commutateur électrique selon l'une des revendications 8 ou 9, caractérisé par le fait que chacune des surfaces d'indexation (120A, 120B) coopérant avec un poussoir d'indexation (430) possède au moins deux surfaces actives (124, 126), l'une formée d'une rampe continue (126) définissant une position instable de l'équipage (400) lorsque le poussoir d'indexation (430, 432) associé se déplace sur cette rampe, et l'autre formée d'une rampe (124) comportant une denture (123) convexe qui détermine deux positions stables de l'équipage (400) selon que le poussoir d'indexation (430, 432) associé est placé d'un côté ou de l'autre de la denture.

11. Commutateur électrique selon l'une des revendications 8 à 10, caractérisé par le fait que l'équipage mobile est guidé à pivotement (220) sur le boîtier et par le fait que les surfaces d'indexation (120A, 120B) coopérant avec l'un respectif des poussoirs d'indexation sont symétriques et comprennent chacune, à partir du plan de symétrie, une première facette (122A, 122B) sensiblement cylindrique de révolution autour de l'axe de pivotement (220) de l'équipage, une seconde facette (124) qui diverge par rapport à l'axe de pivotement (220) en éloignement du plan de symétrie, une troisième facette (126) qui converge en rapprochement de l'axe de pivotement (22à) en éloignement du plan de symétrie et une quatrième facette (128) qui diverge par rapport à l'axe de pivotement (220) en éloignement du plan de symétrie.

**Patentansprüche**

1. Elektrischer Kommutator, mit einem Gehäuse (100), in dem elektrische Kontakte und ein bewegliches Bauteil (400), welches durch einen Bedienungshebel (300) verstellbar ist, um im Hinblick auf das Sicherstellen wenigstens einer vorbestimmten Funktion auf die elektrischen Kontakte einzuwirken, untergebracht sind, mit Indexvorrichtungen (120, 432, 434), die zum Überwachen des Verstellens des Bauteils (400) vorgesehen sind, dadurch gekennzeichnet, daß er weiterhin elastische Vorrichtungen (610, 612) aufweist, die auf das bewegliche Bauteil (400) eine genau gleichbleibende Widerstandskraft ausüben, welche der Verstellung entgegenwirkt.

2. Elektrischer Kommutator nach Anspruch 1, dadurch gekennzeichnet, daß das bewegliche Bauteil (400) in bezug auf das Gehäuse (100) um eine Achse (220) schwenkbar ist.

3. Elektrischer Kommutator nach Anspruch 2, dadurch gekennzeichnet, daß die elastischen Vorrichtungen (610, 612) auf das bewegliche Bauteil (400) eine Widerstandskraft ausüben, deren Resultierende parallel zur Schwenkachse (220) liegt.

4. Elektrischer Kommutator nach einem der Ansprüche 1 bis 3, dadurch gekennzeichnet, daß die elastischen Vorrichtungen (610, 612) das bewegliche Bauteil (400) gegen kronenförmige, ebene Abstützflächen (146, 148) schieben, welche auf der Schwenkachse (220) zentriert sind.

5. Elektrischer Kommutator nach Anspruch 1, mit einem Gehäuse (100), in dem elektrische Kontakte und ein zwischen einer Ruhestellung und wenigstens einer Arbeitsstellung schwenkbares Bauteil (400), welches durch einen Bedienungshebel (300) verstellbar ist, um im Hinblick auf das Sicherstellen wenigstens einer vorbestimmten Funktion auf die elektrischen Kontakte einzuwirken, untergebracht sind, dadurch gekennzeichnet, daß das elastische Bauteil (400) eine seitliche Abstützfläche (460, 464) besitzt, die in bezug auf eine seitliche Abstützfläche (102, 104) des Gehäuses bei Entfernung von der Schwenkachse um einen Winkel (α) auswärts geführt ist, welcher etwas größer als die Schwenkamplitude (β) des Bauteils (400) zwischen der Ruhestellung und der Arbeitsstellung ist.

6. Elektrischer Kommutator nach Anspruch 5, dadurch gekennzeichnet, daß das Bauteil (400) zwischen einer Ruhestellung und zwei zur Ruhestellung symmetrisch liegenden Arbeitsstellungen bewegbar ist und dadurch, daß das bewegliche Bauteil (400) zwei gegenüberliegende Seitenflächen (460, 464) besitzt, die in bezug auf zugeordnete seitliche Abstützflächen (102, 104), welche am Gehäuse vorgesehen sind, um einen Winkel (α) auswärts geführt sind, welcher etwas größer als die Schwenkamplitude (β) des Bauteils (400) zwischen der Ruhestellung und jeder der jeweiligen Arbeitsstellung ist.

7. Elektrischer Kommutator nach Anspruch 5 oder 6, dadurch gekennzeichnet, daß die Schrägstellung in Ruhelage jeder der Seitenflächen (460, 464) des beweglichen Bauteils (400) in bezug auf die Seitenflächen (102, 104) des Gehäuses um die Größenordnung 1° größer als die Schwenkamplitude des Bauteils (400) zwischen der Ruhestellung und jeder der Arbeitsstellungen ist.

8. Elektrischer Kommutator nach einem der Ansprüche 1 bis 7, mit einem Gehäuse (100), in dem elektrische Kontakte und ein zwischen einer Ruhestellung und wenigstens einer Arbeitsstellung schwenkbares Bauteil (400), welches durch einen Bedienungshebel (300) verstellbar ist, um im Hinblick auf das Sicherstellen wenigstens einer vorbestimmten Funktion auf elektrische Kontakte einzuwirken, untergebracht sind, dadurch gekennzeichnet, daß er zwei Index-Druckvorrichtungen (430, 432) des beweglichen Bauteils (400) aufweist, die entsprechende Indexflächen (120A, 120B) belasten.

9. Elektrischer Kommutator nach Anspruch 8, dadurch gekennzeichnet, daß das Bauteil (400) zwischen einer Ruhestellung und zwei Arbeitsstellungen auf beiden Seiten der Ruhestellung bewegbar ist und daß die Indexflächen (120A, 120B), die jeweils mit den Index-Druckvorrichtungen (430) zusammenwirken, symmetrisch sind.

10. Elektrischer Kommutator nach Anspruch 8 oder 9, dadurch gekennzeichnet, daß jede der Indexflächen (120A, 120B), die mit einer Index-Druckvorrichtung (430) zusammenwirkt, wenigstens zwei aktive Flächen (124, 126) aufweist, wobei die eine aus einer kontinuierlichen schiefen Ebene (126) gebildet ist, welche eine instabile Lage des Bauteils (400) definiert, wenn die zugeordnete Index-Druckvorrichtung (430, 432) sich auf dieser schiefen Ebene verlagert, und der andere aus einer schiefen Ebene (124) gebildet ist, welche eine konvexe Zahnung (123) umfaßt, die zwei stabile Lagen des Bauteils (400) festlegt, wenn die zugeordnete Index-Druckvorrichtung (430, 432) von der einen Seite oder der anderen Seite der Zahnung her bewegt wird.

11. Elektrischer Kommutator nach einem der Ansprüche 8 bis 10, dadurch gekennzeichnet, daß das bewegliche Bauteil um eine Achse (220) schwenkbar am Gehäuse geführt ist und dadurch, daß die Indexflächen (120A, 120B), die mit der jeweiligen Index-Druckvorrichtung (430) zusammenwirken, symmetrisch sind und jede, ausgehend von der Symmetrieebene, eine erste Facette (122A, 122B), die genau kreiszylindrisch um die Schwenkachse (220) des Bauteils liegt, eine zweite Facette (124), die in bezug auf die Schwenkachse (220) bei Entfernung von der Symmetrieebene auswärts verläuft, eine dritte Facette (126), die bei Annäherung an die Schwenkachse (220) und bei Entfernung von der Symmetrieebene einwärts verläuft, und eine vierte Facette (128), die in bezug auf die Schwenkachse (220) bei Entfernung von der Symmetrieebene auswärts verläuft, aufweist.

**Claims**

1. Electrical switch of the type comprising a housing (100) which accommodates electrical contacts and a movable element (400) driven in movement by a control lever (300), in order to act on the electrical contacts for the purpose of performing at least one predetermined function, indexing means (120, 432, 434) being provided for controlling the movement of the element (400), characterized in that it comprises, furthermore, elastic means (610, 612) which exert on the movable element a substantially constant resistant force counter to its movement.

2. Electrical switch according to Claim 1, characterized in that the movable element is driven to pivot (220) relative to the housing (100).

3. Electrical switch according to Claim 2, characterized in that the elastic means (610, 612) exert on the movable element (400) a resistant force of which the resultant is parallel to the pivot axis (220).

4. Electrical switch according to one of Claims 1 to 3, characterized in that the elastic means (610, 612) push the movable element (400) against plane ring-shaped bearing surfaces (146, 148) centred on the pivot axis (220).

5. Electrical switch according to Claim 1, of the the comprising a housing (100) which accommodates electrical contacts and an element (400) movable to pivot between a position of rest and at least one working position and driven in movement by a control lever (300), in order to act on the electrical contacts for the purpose of performing at least one predetermined function, characterized in that the movable element (400) has a lateral surface (460, 464) which diverges relative to a lateral bearing face (102, 104) of the housing away from the pivot axis at an angle (α) slightly larger than the amount of pivoting (β) of the element (400) between the position of rest and the working position.

6. Electrical switch according to Claim 5, characterized in that the element (400) is movable between a position of rest and two working positions symmetrical relative to the position of rest, and in that the movable element (400) has two opposite lateral surfaces (460, 464) which diverge relative to respectively associated lateral bearing faces (102, 104) provided on the housing away from the pivot axis (220) at an angle (α) slightly larger than the amount of pivoting (β) of the element (400) between the position of rest and each of the working positions respectively.

7. Electrical switch according to one of Claims 5 or 6, characterized in that the inclination at rest of each of the lateral faces (460, 464) of the movable element (400) relative to the lateral faces (102, 104) of the housing is greater by the order of 1° than the amount of pivoting of the movable element (400) between its position of rest and each working position.

8. Electrical switch according to one of Claims 1 to 7, of the comprising a housing which accommodates electrical contacts and an element (400) movable between a position of rest and at least one working position and driven in movement by a control lever (300), in order to act on electrical contacts for the purpose of performing at least one predetermined function, characterized in that it comprises two pushers (430, 432) for indexing the movable element (400) which are stressed against respective indexing surfaces (120A, 120B).

9. Electrical switch according to Claim 8, characterized in that the element (400) is movable between a position of rest and two working positions located respectively on either side of the position of rest, and in that the indexing surfaces (120A, 120B) interacting respectively with the indexing pushers (430) are symmetrical.

10. Electrical switch according to one of Claims 8 or 9, characterized in that each of the indexing surfaces (120A, 120B) interacting with an indexing pusher (430) has at least two active surfaces (124, 126), one formed by a continuous ramp (126) defining an unstable position of the element (400) when the associated indexing pusher (430, 432) moves on this ramp, and the other formed by a ramp (124) having a convex toothing (123) which defines two stable positions of the element (400), depending on whether the associated indexing pusher (430, 432) is located on one side of the toothing or on the other.

11. Electrical switch according to one of Claims 8 to 10, characterized in that the movable element is guided to pivot (220) on the housing, and in that the indexing surfaces (120A, 120B) interacting with the respective indexing pushers are symmetrical and each comprise, starting from the plane of symmetry, a first facet (122A, 122B) substantially rotationally cylindrical about the pivot axis (220) of the element, a second facet (124) diverging relative to the pivot axis (220) away from the plane of symmetry, a third facet (126) converging towards the pivot axis (220) and away from the plane of symmetry, and a fourth facet (128) diverging relative to the pivot axis (220) away from the plane of symmetry.

FIG_1

EP 0 273 804 B1

FIG.2

<u>FIG_3</u>

208  205  206        212    204   210

240

200  214  220  202

209  207

FIG_4

220

210

206

212

200  202  204

FIG_5

FIG.6

FIG.7